# EUROPEAN PATENT APPLICATION

(11) **EP 1 495 911 A1**
(43) Date of publication of application: **12.01.2005**
(21) Application number: 04076813.7
(22) Date of filing: 21.06.2004
(51) Int. Cl.: B60Q 3/04

(54) **Device for displaying parameters, in particular for instrument panels of vehicles and the like**

(30) Priority: 09.07.2003 IT MI20030318 U
(71) Applicant: Ecie Electric Components, and Instruments Europe S.R.L., Lainate (MI) (IT)
(72) Inventor: Delfi, Luigi, Via Settembrini, 102 Lainate (MI) (IT)
(74) Representative: Raimondi, Margherita

(57) **Abstract**

Device for displaying measurements performed by a sensing instrument (30) and comprising a display screen and at least one light source (40;140) of the LED type controlled by a driver device (41;131) connected to said instrument (30) and able to illuminate with different colours an element (11,12;320) displaying the sensed measurement in accordance with the different values of the said measurement.

## Description

The present invention relates to a device for displaying measurements performed by a sensing device.

It is known in the product sector of measuring and/or display instrumentation, in particular for vehicles, that there exists the need to arrange on the instrument panel a plurality of measuring instruments, such as speedometers and the like, and display devices, such as lamps for indicating the temperature of cooling fluids and/or the fuel level.

It is also known that, in order to realize these signalling devices, it is necessary to provide on the screen a pointer needle associated with corresponding actuating mechanisms which cause the rotation thereof between a minimum value and a maximum value representing the scale of monitored and displayed values.

In order to ensure easy reading by the user, the graduated measurement scale is normally formed by means of silk-screen printing on the screen of the instrument/control panel which is in turn backlit by means of one or more incandescent lamps.

Although performing their function and being widely used, these known devices nevertheless have the drawback that they require the use of rotating needles with associated mechanisms and incandescent lamps which constitute costly and delicate parts which wear rapidly.

The technical problem which is posed, therefore, is that of providing a device for displaying a measurement performed by corresponding instruments, which is simple and inexpensive to produce and is not subject to rapid wear or in any case is able to reduce the mechanical wear present in the known art.

Within the context of this problem a further requirement is that this device should have small dimensions, be easy to apply also to ready existing instrumentation and be particularly suitable for the instrumentation on the instrument panels of vehicles such as motor cycles, cars and the like.

These results are obtained according to the present invention by a device for displaying measurements performed by a sensing instrument and comprising a display screen and at least one light source of the LED type controlled by a driver device connected to said instrument and able to illuminate with different colours an element for displaying/indicating the measurement in accordance with different values of the said measurement.

Further details may be obtained from the following description of a non-limiting example of embodiment of the subject of the present invention provided with reference to the accompanying drawings in which:
- Figure 1 shows a front view of the device according to the invention;
- Figure 2 shows a schematic cross-section along a plane indicated by II-II in Figure 1;
- Figure 3 shows a cross-section, similar to that of Fig. 2, through a second example of embodiment of the device according to the present invention;
- Figures 4a-4d show views of an example of a device for displaying the fuel level of a vehicle;
- Figure 5 shows a front view of a device for displaying the speed of a vehicle according to the invention;
- Figure 6 is a schematic cross-section along the plane indicated by VI-VI in Fig. 5; and
- Figure 7 shows a schematic cross-section through a further example of embodiment of the device according to the present invention.

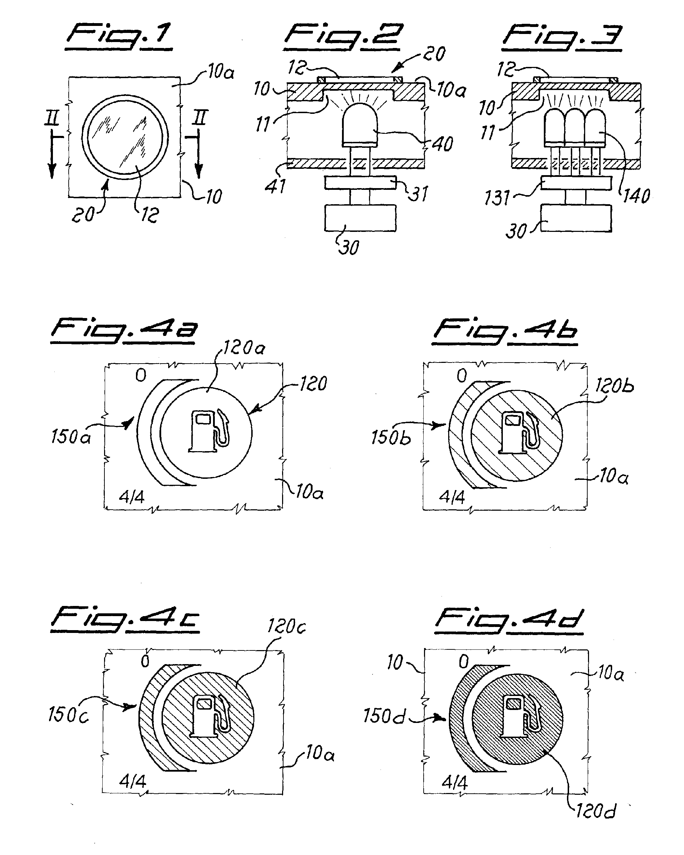

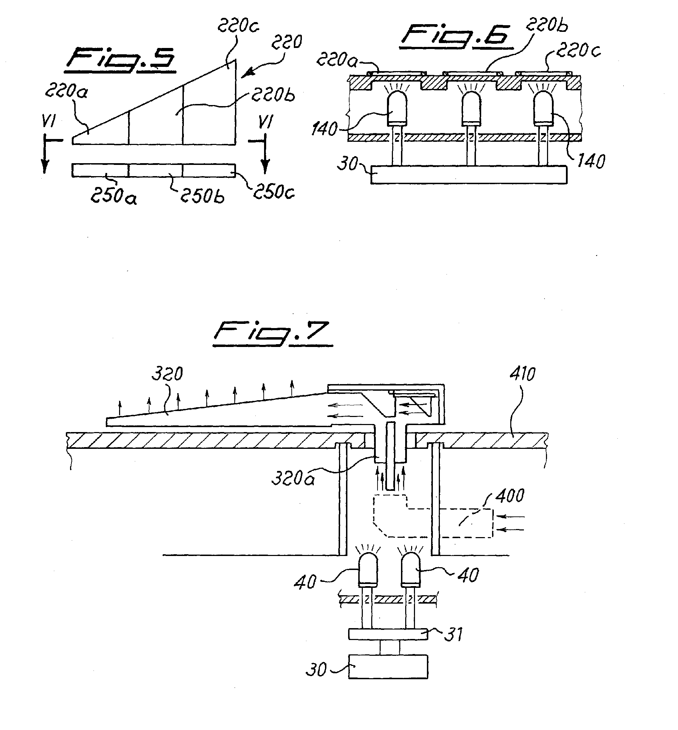

As illustrated in Figs. 1 and 2, the display device according to the present invention comprises a screen 10 having a visible surface 10a with a uniform finish on which a zone 20 is defined, said zone corresponding to the area for graphically displaying the measurement of a variable parameter relating to the various operational characteristics of a vehicle - such as, for example, the fuel level, the water temperature, the speed, the battery charging level - performed by a sensing instrument which is conventional per se and therefore only schematically indicated by 30 in Fig. 2. The display device also comprises a coloured light source 40 which is arranged behind the zone 20 of the screen 10 and is electrically connected to the sensing instrument 30 which will send electric signals corresponding to the instantaneous measurement effected.

According to a first embodiment said coloured light source 40 is realized in the form of a LEDs (light-emitting diodes) of the RGB type which are able to emit a light of different colour corresponding to an electric signal received by a driver device 31 connected to the sensing instrument 30 so that the colour of the LED will correspond to the value of the parameter detected by the said instrument 30.

Alternatively, and as illustrated in Fig. 3, it is possible to envisage a plurality of monochromatic LEDs 140 which are connected to a driver device 131 in turn connected to the sensing instrument 30 so that each electric signal level results in the illumination of a single LED 140 of given colour or a programmed selection of LEDs so as to obtain colouring of the screen 10 determined by the combination of several coloured emitting lamps.

As shown in Fig. 2, it is also possible to envisage defining the measurement display area by means of a reduction 11 in the thickness of the screen 10 of the device in the display area.

Alternatively and/or in addition it is also possible to define the display zone with a perimetral edge 12 of contrasting colour.

With reference to Figures 4a to 4d, the operating principle of the display device is as follows:
- in order to display, for example, the fuel level of a vehicle;
- the surface 10a of the screen 10 of the instrument panel is provided with an area 120 having, illustrated thereon, the graphic symbol corresponding to the measurement to be displayed, in the example a fuel pump for measurement of the fuel level available;
- the LEDs 40 are arranged behind said display area, connecting them to the driver device/electronic control unit which is in turn connected to the sensing instrument 30 for example by means of conventional printed circuit bases 41 on which the LEDs 40 are also mounted (Figs. 2, 3);
- in this way the display zone will be lit up with a colour corresponding to the signal emitted by the measuring instrument;
- in addition to display of the measurement it is also possible to provide a further graphic illustration 150 representing the scale of the measurement displayed, obtained by means of silk-screen printing with a descriptive function (not back-lit) or represented in a similar manner by a series of LEDs situated behind the screen and suitably arranged so as to identify with a colour code the scale representing the measurement displayed with a same colour.

Thus in Fig. 4a, the two zones 120a, 150a are both unilluminated; in Fig. 4b the pump 120b is illuminated in green, as is the graduated scale 150b, to indicate that the tank is full; in Fig. 4c the pump 120c is illuminated in orange, as is the scale 150c, to indicate a low level; and in Fig. 4d the pump 120d is illuminated in red, as is the scale 150d, to indicate that the tank is nearly empty.

Figs. 5 and 6 show a further example of embodiment of the display device with a colour code applied to a speed-measuring instrument; in this example the different colours of the parts 220a, 220b, 220c of the trapezoidal figure correspond to different speeds of the vehicle, as shown by the associated graduated scale 250a,250b,250c.

Fig. 7 shows a further embodiment of the device according to the present invention suitable for engagement with a pointer needle 320 of an analog instrument.

In this arrangement the coloured light source 40 is arranged coaxially underneath the pivot 320a of a needle 320 made of transparent material and thus receiving directly light from the LEDs.

The needle is formed so as to cause the reflection of light rays which illuminate it completely.

Figure 7 also shows, schematically in broken lines, a light-guiding element 400 which, in the example of the figure, is an integral part of the dial 410 of an analog instrument not shown.

The output end of the light-guiding element 400 is arranged in alignment with the said pivot 320a of the needle 320 of the analog instrument so as to convey the light rays emitted by the source 40 inside the needle.

In both cases the illumination of the needle 320 changes colour in accordance with predetermined speeds reached by the vehicle, providing therefore not only a quantitative indication of the speed, but also a qualitative signal indicating, for example, excessive speed.

It is therefore obvious how the display device according to the invention is able to provide in a simple and reliable manner clear and obvious indications as to a measurement performed by a sensing instrument without the need for complicated and costly mechanisms; in addition to this, the use of light sources of the LED type ensures a long life of the device in view of the fact that LEDs are substantially wear-free.

## Claims

1. Device for displaying measurements performed by a sensing instrument (30) and comprising a display screen (10;410), **characterized in that** it comprises at least one light source (40;140) of the LED type controlled by a driver device (31;131) connected to said instrument (30) and able to illuminate with different colours an element (20;120;220;320) for displaying/indicating the measurement in accordance with different values of the said measurement.

2. Device according to Claim 1, **characterized in that** said light source (140) is of the type emitting monochromatic light.

3. Device according to Claim 1, **characterized in that** said light source (40) is of the type emitting polychromatic light.

4. Device according to Claim 2, **characterized in that** said light source (140) consists of a plurality of LEDs.

5. Device according to Claim 3, **characterized in that** said light source (140) consists of an LED.

6. Device according to Claim 1, **characterized in that** said element (20;120) for displaying/indicating the measurement is a specific area (11,12) of the said screen (10).

7. Device according to Claim 6, **characterized in that** said illumination area (11) of the screen (10) is defined by a zone of reduced thickness of the said screen opposite the associated light source (40;140).

8. Device according to Claim 6, **characterized in that** said illumination area (12) of the screen (10) is defined by an image (20;120;220) arranged on the visible surface (10a) of the screen (10) opposite the rear-lying light source (40;140).

9. Device according to Claim 8, **characterized in that** a graduated scale (150;250) representing the parameter of the measurement displayed is associated with said illumination zone (20;120;220) of the screen (10).

10. Device according to Claim 9, **characterized in that** said graduated scale (150;250) is of the colour code type.

11. Device according to Claim 10, **characterized in that** it comprises at least one light source (40;140) able to produce said colour code of the graduated scale (150;250).

12. Device according to Claim 1, **characterized in that** said element for displaying/indicating the measurement is a needle (320) of an analog instrument.

13. Device according to Claim 12, **characterized in that** it comprises a light-guiding element (300) arranged between the light source (40;140) and the pivot (320a) of the needle (320).

14. Device according to Claim 1, **characterized in that** it is a device (120) displaying a measurement of the fuel level of a vehicle.

15. Device according to Claim 1, **characterized in that** it is a device (220;230) displaying a measurement of the speed of a vehicle.
